Europäisches Patentamt

(19) European Patent Office

Office européen des brevets

(11) Publication number : **0 592 207 A2**

(12) **EUROPEAN PATENT APPLICATION**

(21) Application number : **93307942.8**

(22) Date of filing : **06.10.93**

(51) Int. Cl.$^5$ : **H04Q 7/04, H04B 7/26**

(30) Priority : **08.10.92 US 957953**

(43) Date of publication of application :
**13.04.94 Bulletin 94/15**

(84) Designated Contracting States :
**DE FR GB SE**

(71) Applicant : **NORTHERN TELECOM LIMITED**
**World Trade Center of Montreal, 380 St.**
**Antoine Street West, 8th Floor**
**Montreal, Quebec H2Y 3Y4 (CA)**

(72) Inventor : **Faruque, Saleh M.**
**4 Donna Drive**
**Brampton, Ontario L6Z 3T3 (CA)**

(74) Representative : **Dennis, Mark Charles et al**
**Northern Telecom Europe Limited Patents and**
**Licensing West Road**
**Harlow Essex CM20 2SH (GB)**

(54) **A non-interfering frequency plan for cellular communication systems.**

(57)    An improved method of assigning frequencies in an N=9 frequency plan so as to eliminate adjacent channels. The frequency plan disclosed reduces the effects of adjacent channel and co-channel interference and further enhances channel capacity.

Figure 5a

EP 0 592 207 A2

EP 0 592 207 A2

## Background of the Invention

Interference is a major concern in Cellular Communications systems. It is generally determined by Carrier to Interference ratio (C/I) which in turn depends on Frequency Planning and Antenna Engineering. The most popular frequency plan known today is the N=7 plan which is also known to exhibit Adjacent channel Interference (ACI). The resulting effects are: a) Poor Voice Quality, b) Call Dropping, c) Poor Control channel Capacity and e) Ping-Pong Effect.

It is known that performance degradation due to ACI is inherent in the N=7 plan. In order to reduce these effects an N=9 plan has been considered.

Although the N=9 frequency plan has been known for several years, the cellular industries have overlooked its potential for practical application. Recently, a frequency assignment technique was proposed for N=9 and N=12 systems to minimize complexity and enhance traffic capacity. For example, United States patent 5,111,534 which issued to Benner discloses a method of assigning channels given a 9 cell cluster. However, several potential interference problems remain, due to channel adjacencies. This has the effect of causing adjacent channel interference and reducing control channel paging capacity.

Accordingly, there is a need for the development of a new frequency plan which reduces or eliminates the channel adjacency while enhancing the capacity.

It is an object of the present invention to provide a frequency plan which outperforms the existing N=7 frequency plan and is well suited for TDMA digital transition.

Another object of the present invention is to provide an improved N=9 frequency plan which aims to eliminate ACI and reduce co-channel interference.

According to the present invention there is provided a method of assigning frequencies in an N=9 frequency plan, wherein available channel frequencies are divided into nine frequency groupings characterised by:

a) forming a 3 x 3 rhombic shaped cell cluster; and

b) assigning one frequency grouping to each cell in said cluster such that ascending odd and even numbered frequency groupings are sequentially assigned to each cell either row by row or column by column to form said cluster such that channel adjacency is eliminated.

One embodiment of the invention makes use of an N=9 sectorized site using directional antenna with downtilt to improve performance due to Line-Of-Sight propagation in the serving base and Out-Of-Sight propagation in adjacent bases.

## Brief Description of the Drawings

Figure 1a is a table showing the N=7 frequency plan;
Figure 1b shows a first version of N=7 cell plan with adjacent channels illustrated;
Figure 1c shows a second version of an N=7 cell plan with adjacent channels reduced;
Figure 2 shows the co-channel interference of the cell plan of Figure 1c;
Figure 3 illustrates adjacent channel interference;
Figure 4a is a table showing the N=9 frequency plan according to the preferred embodiment of the invention;
Figure 4b shows the improved N=9 cell plan according to a first embodiment of the invention;
Figure 4c shows the N=9 growth plan of Figure 4b;
Figure 4d shows an improved N=9 cell plan according to a second embodiment of the invention;
Figure 4e shows the N=9 growth plan of Figure 4d;
Figure 5a shows an N=9 three sector plan of the invention using the embodiment of Figure 4b;
Figure 5b shows an N=9, three sector growth plan;
Figure 5c shows the N=9, three sector growth plan for the embodiments of Figures 4d and 4e; and
Figure 6 shows how adjacent channel interference is minimized in an N=9 sectorized plan.

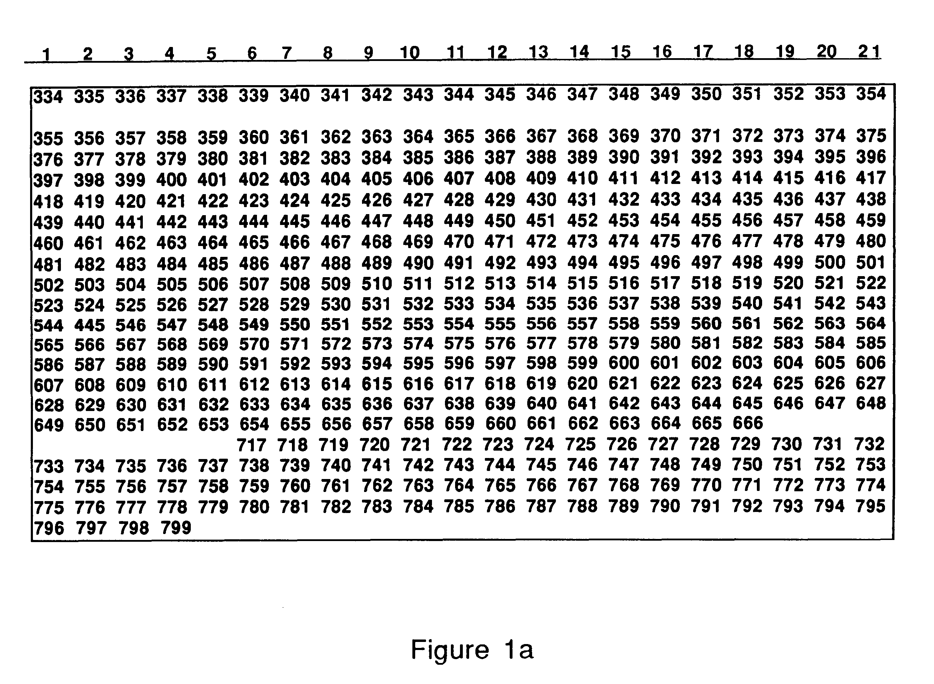

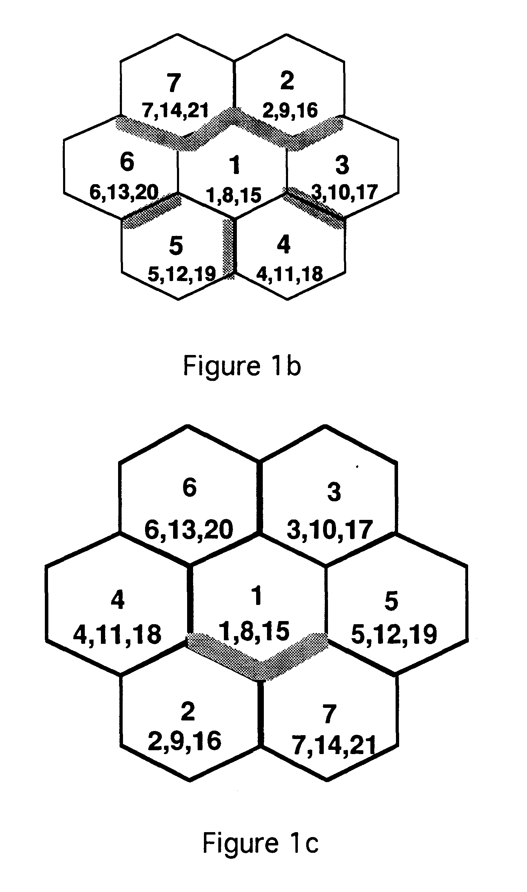

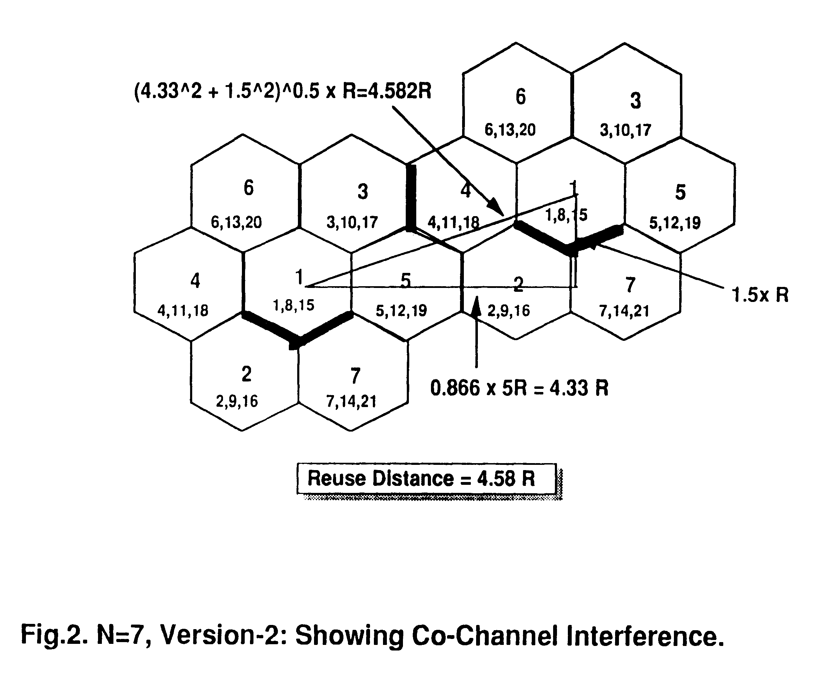

As shown in Figure 1a, the N=7 frequency plan is based on dividing all the available frequencies into 21 frequency groups while one control channel is assigned per group. The corresponding N=7 cell cluster is shown in Figure 1b where three frequency groups are assigned/cell. The total number of frequency groups per cluster is 7 x 3 = 21. The channel assignment is based on the following sequence: (N, N+7, N+14) where N is the cell number (N = 1,2,...7). This scheme provides 7 x 30 kHz = 210 kHz channel isolation within a cell and no isolation between cells as shown in Figure 1b. In Figure 1c, an optimized version of N=7 plan is given which provides 71% reduction in adjacent channels due to channel re-assignment within the cluster. However, channel adjacency reappears as cells are repeated as shown in Figure 2. This indicates that the total elimination of channel adjacency is practically impossible in the N=7 plan which gives rise to adjacent channel interference throughout the network.

2

With regard to co-channel interference, a co-channel interferer has the same nominal frequency as the desired frequency. It arises from multiple use of the same frequency. For OMNI sites (see Figure 2) this is given by:

$$CCI = 10 \log[1/J(dc/di)^{-\mu}]$$

where

J  = number of co-channel interferers (J=1,2,...6)
μ  = propagation constant
di  = interferer distance from the mobile
dc  = carrier distance from the mobile

with

μ  = 4, repeat distance = 4.58 and J=6:
CCI = 18.6 dB six interferers (worst case)

It was assumed that negligible amount of interference occurs from distant co-channel interferers.

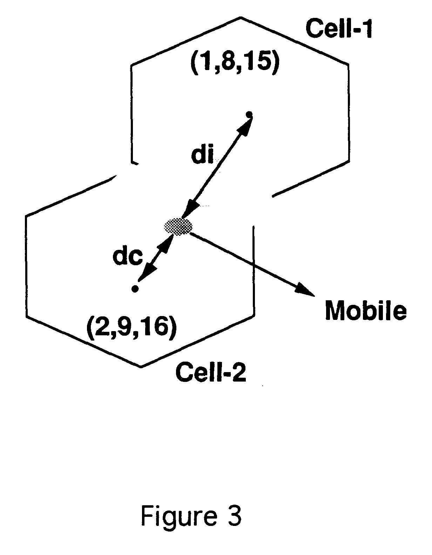

Adjacent channel interference arises from energy spillover between two adjacent channels. This can be evaluated with the aid of Figure 3, where it is assumed that the ratio di/dc varies as the mobile moves towards or away from the cell. Moreover, the out-of-band signals are attenuated by the post modulation filter at least by 26 dB (EIA Standard). Assuming that the mobile is in the handoff region (di/dc = 1, 0dB isolation), the adjacent channel interference will be:

$$ACI = 10 \log[ (dc/di)^{-\mu}] + \text{Attenuation by Radio } (\geqq 26 \text{ dB}) \geqq 26 \text{ dB (at the cell boundary)}$$

In a fading environment this margin (26 dB) is inadequate and the call will be dropped.

Thus, the N=7 frequency plan exhibits unacceptable Adjacent Channel Interference (ACI). This is inherent in this plan, resulting in: a) poor voice quality, b) call dropping, c) premature handoff, d) poor control channel capacity, e) ping-pong effect and f) call dragging etc. With the advent of the TDMA technique these problems are expected to rise.

**Description of the Preferred Embodiment**

In order to overcome these problems, an improved N=9 frequency plan is proposed which does not have channel adjacency while still enhancing both traffic and control channel capacity.

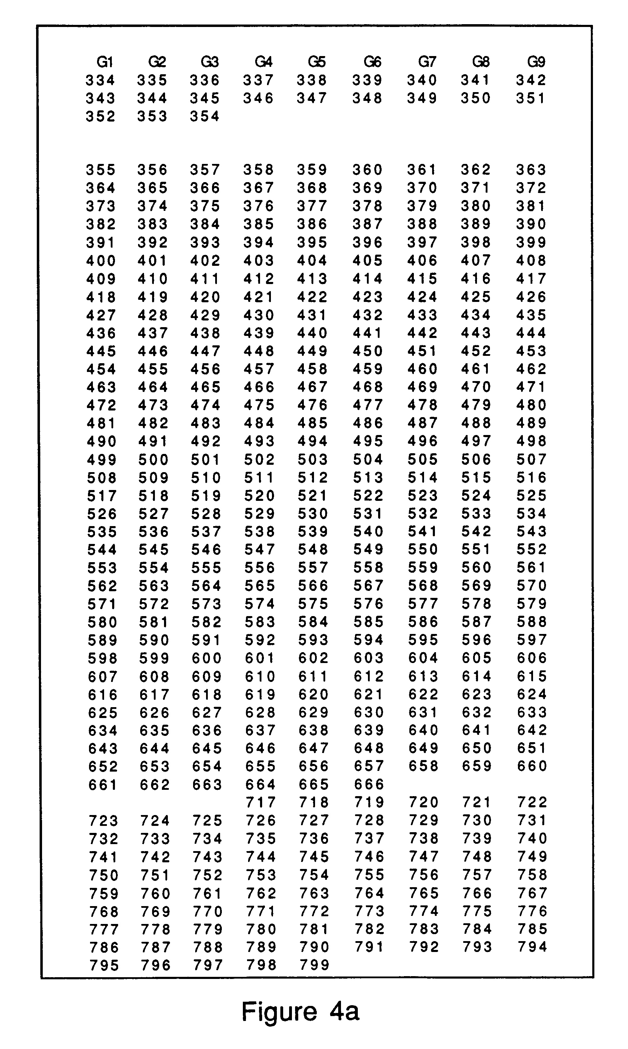

The proposed N=9 frequency plan is based on dividing all available frequencies into nine (or multiples of 9) frequency groups as shown in Figure 4a. The cell cluster is based on an Odd/Even sequence: 1, 3, 5, 7, 9, 2, 4, 6, 8; forming a patter of 3 x 3 matrix shown below:

```
3 x 3
1 7 4
3 9 6
5 2 8
```

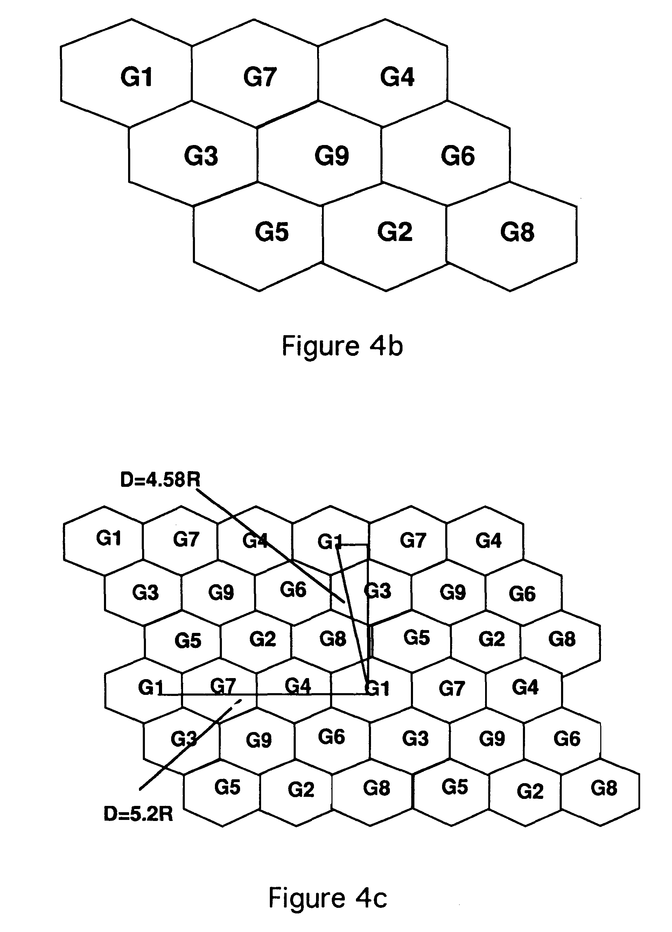

The corresponding N=9 cell cluster is shown in Figure 4b where one frequency group is assigned/cell. The RHOMBIC nature of the cluster is due to hexagonal patterns of the cell. Unlike N=7 frequency plan, this frequency plan does not have channel adjacency within the cell cluster. Channel isolation with the cell cluster is 9 x 30 kHz = 270 kHz compared to 230 kHz in the N=7 plan.

Because of the RHOMBIC pattern, expansions or growth are made in the vertical and horizontal directions. This is based on the same odd/even sequence which forms an N x N matrix shown below. A 4 x 4 and a 5 x 5 growth plan are given below as illustrations.

```
... 1 7 4 1 7 4 1 7 4 1 7 4 ...
... 3 9 6 3 9 6 3 9 6 3 9 6 ...
... 5 2 8 5 2 8 5 2 8 5 2 8 ...
... 7 4 1 7 4 1 7 4 1 7 4 1 ...
... 9 6 3 9 6 3 9 6 3 9 6 3 ...
... 2 8 5 2 8 5 2 8 5 2 8 5 ...
... 4 1 7 4 1 7 4 1 7 4 1 7 ...
... 6 3 9 6 3 9 6 3 9 6 3 9 ...
... 8 5 2 8 5 2 8 5 2 8 5 2 ...
```

This expansion rule translates into the growth pattern shown in Figure 4c. Because of RHOMBIC pattern, there are two co-channel interferers from a distance of 4.58R and two from 5.2R where R = cell radius. The adjacent channel isolation is maintained throughout the network, as can be seen in Figure 4c.

In another embodiment, the cell cluster is based on the same odd/even sequence: 1,3,5,7,9,2,4,6,8. However, a 3 x 3 matrix shown below is formed:

**3 x 3**
**1 3 5**
**7 9 2**
**4 6 8**

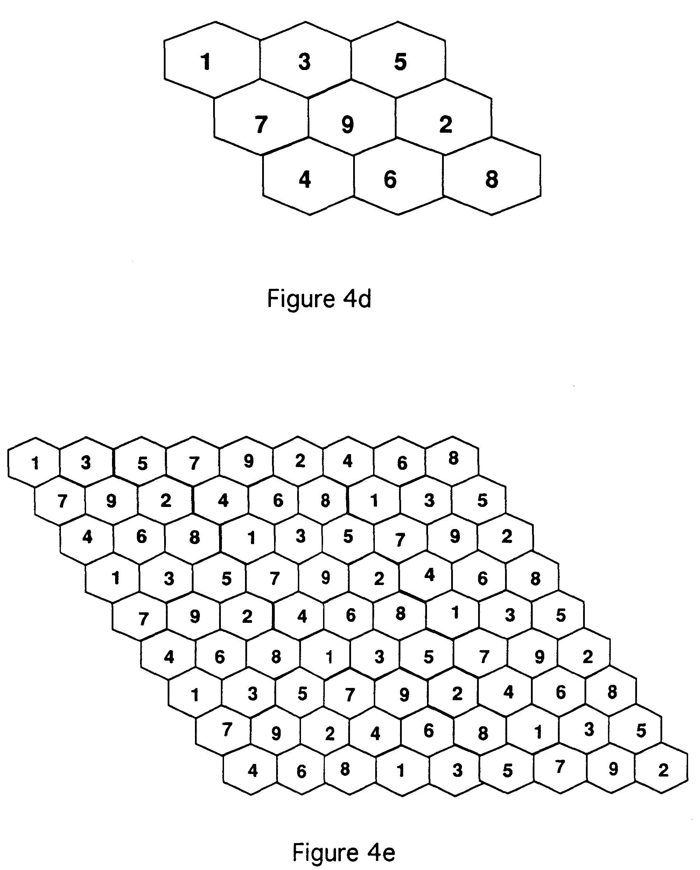

The corresponding N=9 cell cluster is shown in Figure 4d. Figure 4e shows how the cell pattern is expanded from a 3 x 3 cluster. As in the frequency plan of figure 4c, the adjacent channel isolation is maintained throughout the network.

Since there are two co-channel interferers from a repeat distance of 4.58R and two from 5.2R, the co-channel interference can now be calculated as follows:

$$CCI = 10\log[\frac{R^{-\mu}}{2(4.58R)^{-\mu} + 2(5.2R)^{-\mu}}]$$

with $\mu = 4$ we obtain

CCI = 21.38 dB four interferers (worst case)

which is approximately 2.8 dB better than N = 7.

The nearest adjacent channel in N=9 is approximately 3R away from the serving base where R is the cell radius (see Figure 4c). Thus ACI can be evaluated by means of the following equation:

$$ACI = 10 \log[(d_c/d_i)^{-\mu}] + \text{attenuation by radio}(\cong 26 \text{ dB})$$

In the handoff region, $d_i/d_c=3-1=2$. with $\mu=4$ this translates into:

$$ACI \cong 38 \text{ dB}$$

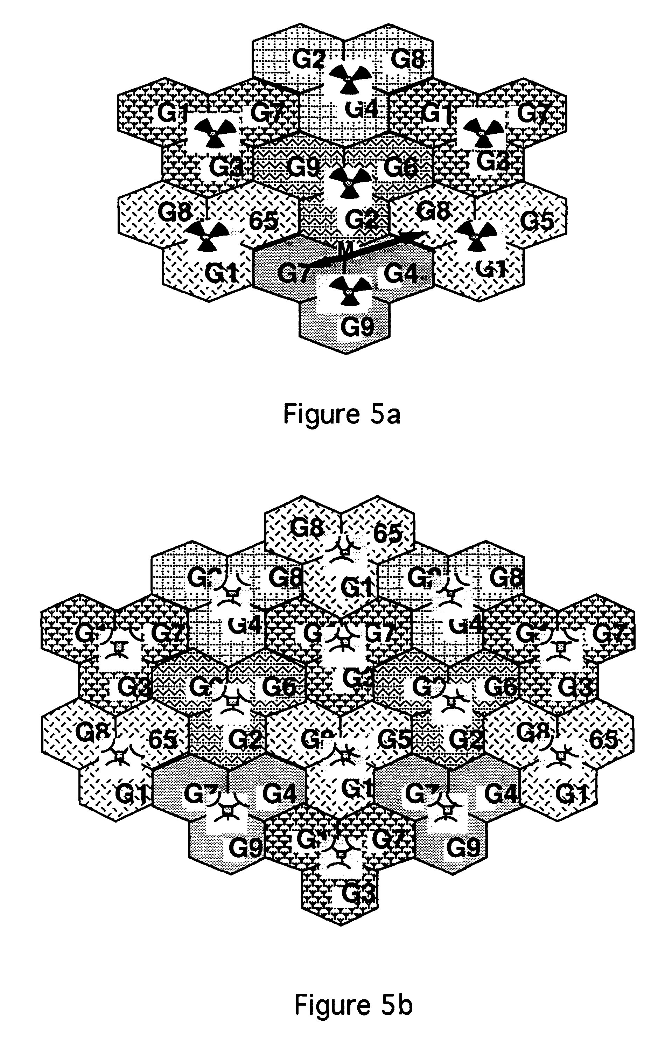

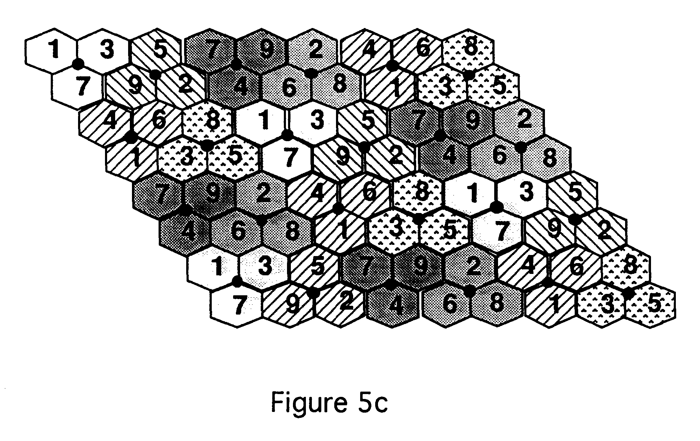

Figure 5a shows a sectorized version of the plan where nine frequency groups are distributed among twenty one sectors in groups of three as follows:

| Group-1 | Group-2 | Group-3 | Group-4 | Group 5 |
|---------|---------|---------|---------|---------|
| G1,G3,G7 | G1,G5,G8 | G2,G4,G8 | G2,G6,G9 | G4,G7,G9 |

where Group-1 and Group 2 are repeated in the same cluster. As a result it has 130% more capacity than the existing N=7, 120° sectorization plan. The control channel capacity is also enhanced due to adjacent channel isolation. In the handoff region, the adjacent channel isolation is due to antenna directivity, distance ratio as well as post modulation filter. Co-channel interference is also reduced because of antenna directivity.

In the sectorized growth plan shown in Figure 5b, both horizontal and vertical growth are achieved by repeating frequencies in groups of three, according to the scheme given above. Once again, the adjacent channel isolation has been maintained throughout the network.

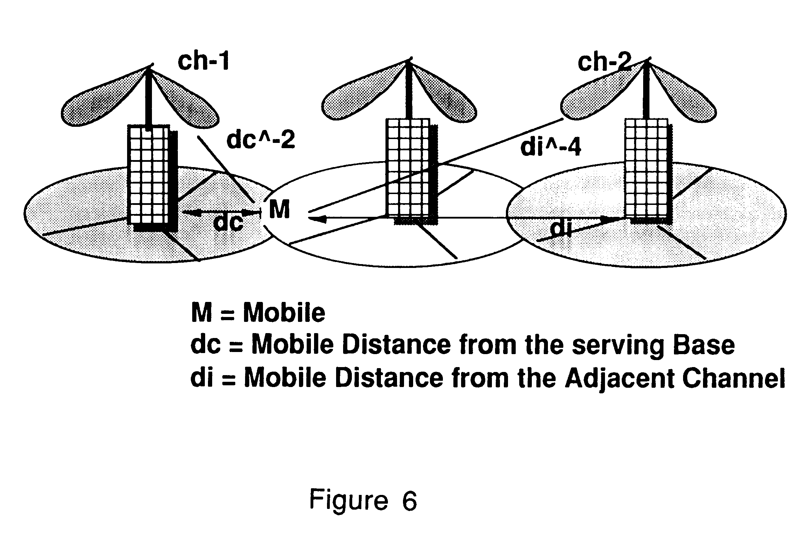

Sectorization is achieved by dividing a cell into three or six sectors while directional antennas are used in each sector. Thus antenna configuration and their directivity plays an important role in determining the CCI and ACI performance. In order to illustrate this further, reference is made to Figure 6, where three 120 degree cell sites having directional antennas with downtilt are taken as the basis for the analysis. Note that a sectorized site, using directional antennas with downtilt, provides line-of-site propagation in the serving base and out of sight propagation in adjacent bases. Since line-of-sight propagation closely approximates square law attenuation and out-of-sight propagation approximates 4th power attenuation, the adjacent channel isolation in N=9 is always greater than that of N=7. Moreover antenna directivity provides an additional isolation which must be taken into account in the analysis. These assumptions modify the CCI prediction equation as:

$$CCI = 10\log[(\emptyset c/\emptyset i)(\frac{d_c^{-\mu_1}}{\sum_i d_i^{-\mu_2}})]$$

where
i         = 1,2,3,4 (two distances of 4.5R and two distances of 5.2R)
$d_i$       = interferer distance

$d_c$ = carrier distances
$\varnothing_1/\varnothing_2$ = antenna directivity factor
$\mu_1$ = line-of-sight attenuation factor
$\mu_2$ = out-of-sight attenuation factor from other sites where $\mu_2 > \mu_2$

Using frequency repeat distances of 4.5 and 5.2 and with $\mu_1 = 2$, $\mu_2 = 4$, and antenna directivity factor of 2 (typical), the CCI at the cell boundary becomes:

CCI = 24.38 dB four interferers (worst case)

which is 3dB better than N=9 OMNI. This is due to antenna directivity. The performance can be further improved by proper antenna orientation.

Adjacent channel interference depends on channel separation, antenna orientation and post modulation filter. Since the adjacent channel is isolated by a distance of 3R, R being the cell radius, the effective separation at the cell boundary is 3-1=2. With antenna orientation factor =2, $\mu_1 = 2$, $\mu_2 = 4$, the CCI becomes:

$$ACI = 10\log[\varnothing c/\varnothing i] \, (\frac{d_c - \mu 1}{d_l - \mu 2})] + \text{attenuation by radio} \, (\cong 26 \text{ dB}) = 41 \text{ dB}$$

Clearly, it can tolerate a large fading depth.

Both co-channel and adjacent channel interference in N=9 frequency plan are much lower than N=7 frequency plan. It is expected to improve voice quality, reduce call dropping, eliminate premature handoff, enhance voice and control channel capacity etc.

An existing cellular infrastructure can be modified by retuning the RF radio at the cell sites to operate on the newly assigned frequencies.

Similarly, the operating software of the switch would be modified to take into consideration the change in frequencies of the various cell sites.

## Claims

1. A method of assigning frequencies in an N=9 frequency plan, wherein available channel frequencies are divided into nine frequency groupings, characterised by:

   a) forming a 3 x 3 rhombic shaped cell cluster; and

   b) assigning one frequency grouping to each cell in said cluster such that ascending odd and even numbered frequency groupings are sequentially assigned to each cell either row by row or column by column to form said cluster such that channel adjacency is eliminated.

2. A method as defined in claim 1, characterised in that cell growth is achieved by repeating steps a and b and overlapping each cluster over a specific area.

3. A method as defined in claim 1 or 2, characterised in that said 3 x 3 rhombic-shaped cluster is based on the 3 x 3 matrix

   <u>3 x 3</u>
   1 7 4
   3 9 6
   5 2 8

   wherein numbers 1 to 9 represent the frequency grouping of each cell.

4. A method as defined in claim 1 or 2, characterised in that said 3 x 3 rhombic-shaped cluster is based on the 3 x 3 matrix

   <u>3 x 3</u>
   1 3 5
   7 9 2
   4 6 8

   wherein numbers 1 to 9 represent the frequency grouping of each cell.

5. A cellular communications system in which frequency assignment is in accordance with an N = 9 sectorised plan, characterised in that directional antenna are used with downtilt to provide, substantially, line-of-sight propagation in the serving base and out-of-sight propagation in adjacent bases.

EP 0 592 207 A2

| 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|
| 334 | 335 | 336 | 337 | 338 | 339 | 340 | 341 | 342 | 343 | 344 | 345 | 346 | 347 | 348 | 349 | 350 | 351 | 352 | 353 | 354 |
| 355 | 356 | 357 | 358 | 359 | 360 | 361 | 362 | 363 | 364 | 365 | 366 | 367 | 368 | 369 | 370 | 371 | 372 | 373 | 374 | 375 |
| 376 | 377 | 378 | 379 | 380 | 381 | 382 | 383 | 384 | 385 | 386 | 387 | 388 | 389 | 390 | 391 | 392 | 393 | 394 | 395 | 396 |
| 397 | 398 | 399 | 400 | 401 | 402 | 403 | 404 | 405 | 406 | 407 | 408 | 409 | 410 | 411 | 412 | 413 | 414 | 415 | 416 | 417 |
| 418 | 419 | 420 | 421 | 422 | 423 | 424 | 425 | 426 | 427 | 428 | 429 | 430 | 431 | 432 | 433 | 434 | 435 | 436 | 437 | 438 |
| 439 | 440 | 441 | 442 | 443 | 444 | 445 | 446 | 447 | 448 | 449 | 450 | 451 | 452 | 453 | 454 | 455 | 456 | 457 | 458 | 459 |
| 460 | 461 | 462 | 463 | 464 | 465 | 466 | 467 | 468 | 469 | 470 | 471 | 472 | 473 | 474 | 475 | 476 | 477 | 478 | 479 | 480 |
| 481 | 482 | 483 | 484 | 485 | 486 | 487 | 488 | 489 | 490 | 491 | 492 | 493 | 494 | 495 | 496 | 497 | 498 | 499 | 500 | 501 |
| 502 | 503 | 504 | 505 | 506 | 507 | 508 | 509 | 510 | 511 | 512 | 513 | 514 | 515 | 516 | 517 | 518 | 519 | 520 | 521 | 522 |
| 523 | 524 | 525 | 526 | 527 | 528 | 529 | 530 | 531 | 532 | 533 | 534 | 535 | 536 | 537 | 538 | 539 | 540 | 541 | 542 | 543 |
| 544 | 445 | 546 | 547 | 548 | 549 | 550 | 551 | 552 | 553 | 554 | 555 | 556 | 557 | 558 | 559 | 560 | 561 | 562 | 563 | 564 |
| 565 | 566 | 567 | 568 | 569 | 570 | 571 | 572 | 573 | 574 | 575 | 576 | 577 | 578 | 579 | 580 | 581 | 582 | 583 | 584 | 585 |
| 586 | 587 | 588 | 589 | 590 | 591 | 592 | 593 | 594 | 595 | 596 | 597 | 598 | 599 | 600 | 601 | 602 | 603 | 604 | 605 | 606 |
| 607 | 608 | 609 | 610 | 611 | 612 | 613 | 614 | 615 | 616 | 617 | 618 | 619 | 620 | 621 | 622 | 623 | 624 | 625 | 626 | 627 |
| 628 | 629 | 630 | 631 | 632 | 633 | 634 | 635 | 636 | 637 | 638 | 639 | 640 | 641 | 642 | 643 | 644 | 645 | 646 | 647 | 648 |
| 649 | 650 | 651 | 652 | 653 | 654 | 655 | 656 | 657 | 658 | 659 | 660 | 661 | 662 | 663 | 664 | 665 | 666 | | | |
| | | | | | 717 | 718 | 719 | 720 | 721 | 722 | 723 | 724 | 725 | 726 | 727 | 728 | 729 | 730 | 731 | 732 |
| 733 | 734 | 735 | 736 | 737 | 738 | 739 | 740 | 741 | 742 | 743 | 744 | 745 | 746 | 747 | 748 | 749 | 750 | 751 | 752 | 753 |
| 754 | 755 | 756 | 757 | 758 | 759 | 760 | 761 | 762 | 763 | 764 | 765 | 766 | 767 | 768 | 769 | 770 | 771 | 772 | 773 | 774 |
| 775 | 776 | 777 | 778 | 779 | 780 | 781 | 782 | 783 | 784 | 785 | 786 | 787 | 788 | 789 | 790 | 791 | 792 | 793 | 794 | 795 |
| 796 | 797 | 798 | 799 | | | | | | | | | | | | | | | | | |

Figure 1a

Figure 1b

Figure 1c

**Fig.2. N=7, Version-2: Showing Co-Channel Interference.**

**Figure 3**

| G1 | G2 | G3 | G4 | G5 | G6 | G7 | G8 | G9 |
|-----|-----|-----|-----|-----|-----|-----|-----|-----|
| 334 | 335 | 336 | 337 | 338 | 339 | 340 | 341 | 342 |
| 343 | 344 | 345 | 346 | 347 | 348 | 349 | 350 | 351 |
| 352 | 353 | 354 | | | | | | |
| | | | | | | | | |
| | | | | | | | | |
| 355 | 356 | 357 | 358 | 359 | 360 | 361 | 362 | 363 |
| 364 | 365 | 366 | 367 | 368 | 369 | 370 | 371 | 372 |
| 373 | 374 | 375 | 376 | 377 | 378 | 379 | 380 | 381 |
| 382 | 383 | 384 | 385 | 386 | 387 | 388 | 389 | 390 |
| 391 | 392 | 393 | 394 | 395 | 396 | 397 | 398 | 399 |
| 400 | 401 | 402 | 403 | 404 | 405 | 406 | 407 | 408 |
| 409 | 410 | 411 | 412 | 413 | 414 | 415 | 416 | 417 |
| 418 | 419 | 420 | 421 | 422 | 423 | 424 | 425 | 426 |
| 427 | 428 | 429 | 430 | 431 | 432 | 433 | 434 | 435 |
| 436 | 437 | 438 | 439 | 440 | 441 | 442 | 443 | 444 |
| 445 | 446 | 447 | 448 | 449 | 450 | 451 | 452 | 453 |
| 454 | 455 | 456 | 457 | 458 | 459 | 460 | 461 | 462 |
| 463 | 464 | 465 | 466 | 467 | 468 | 469 | 470 | 471 |
| 472 | 473 | 474 | 475 | 476 | 477 | 478 | 479 | 480 |
| 481 | 482 | 483 | 484 | 485 | 486 | 487 | 488 | 489 |
| 490 | 491 | 492 | 493 | 494 | 495 | 496 | 497 | 498 |
| 499 | 500 | 501 | 502 | 503 | 504 | 505 | 506 | 507 |
| 508 | 509 | 510 | 511 | 512 | 513 | 514 | 515 | 516 |
| 517 | 518 | 519 | 520 | 521 | 522 | 523 | 524 | 525 |
| 526 | 527 | 528 | 529 | 530 | 531 | 532 | 533 | 534 |
| 535 | 536 | 537 | 538 | 539 | 540 | 541 | 542 | 543 |
| 544 | 545 | 546 | 547 | 548 | 549 | 550 | 551 | 552 |
| 553 | 554 | 555 | 556 | 557 | 558 | 559 | 560 | 561 |
| 562 | 563 | 564 | 565 | 566 | 567 | 568 | 569 | 570 |
| 571 | 572 | 573 | 574 | 575 | 576 | 577 | 578 | 579 |
| 580 | 581 | 582 | 583 | 584 | 585 | 586 | 587 | 588 |
| 589 | 590 | 591 | 592 | 593 | 594 | 595 | 596 | 597 |
| 598 | 599 | 600 | 601 | 602 | 603 | 604 | 605 | 606 |
| 607 | 608 | 609 | 610 | 611 | 612 | 613 | 614 | 615 |
| 616 | 617 | 618 | 619 | 620 | 621 | 622 | 623 | 624 |
| 625 | 626 | 627 | 628 | 629 | 630 | 631 | 632 | 633 |
| 634 | 635 | 636 | 637 | 638 | 639 | 640 | 641 | 642 |
| 643 | 644 | 645 | 646 | 647 | 648 | 649 | 650 | 651 |
| 652 | 653 | 654 | 655 | 656 | 657 | 658 | 659 | 660 |
| 661 | 662 | 663 | 664 | 665 | 666 | | | |
| | | | 717 | 718 | 719 | 720 | 721 | 722 |
| 723 | 724 | 725 | 726 | 727 | 728 | 729 | 730 | 731 |
| 732 | 733 | 734 | 735 | 736 | 737 | 738 | 739 | 740 |
| 741 | 742 | 743 | 744 | 745 | 746 | 747 | 748 | 749 |
| 750 | 751 | 752 | 753 | 754 | 755 | 756 | 757 | 758 |
| 759 | 760 | 761 | 762 | 763 | 764 | 765 | 766 | 767 |
| 768 | 769 | 770 | 771 | 772 | 773 | 774 | 775 | 776 |
| 777 | 778 | 779 | 780 | 781 | 782 | 783 | 784 | 785 |
| 786 | 787 | 788 | 789 | 790 | 791 | 792 | 793 | 794 |
| 795 | 796 | 797 | 798 | 799 | | | | |

Figure 4a

Figure 4b

Figure 4c

Figure 4d

Figure 4e

Figure 5a

Figure 5b

Figure 5c

ch-1 ch-2

$dc\char`\^-2$

$di\char`\^-4$

dc M

di

**M = Mobile**
**dc = Mobile Distance from the serving Base**
**di = Mobile Distance from the Adjacent Channel**

Figure 6

EP 0 592 207 A2